(19) Europäisches Patentamt European Patent Office Office européen des brevets

(11) **EP 4 261 510 A1**

(12) **DEMANDE DE BREVET EUROPEEN**

(43) Date de publication:
**18.10.2023 Bulletin 2023/42**

(21) Numéro de dépôt: **23165796.6**

(22) Date de dépôt: **31.03.2023**

(51) Classification Internationale des Brevets (IPC):
**G01K 3/00** *(2006.01)* **G01K 7/01** *(2006.01)*
**G05F 3/30** *(2006.01)*

(52) Classification Coopérative des Brevets (CPC):
**G01K 3/005; G01K 7/01; G05F 3/30**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **14.04.2022 FR 2203444**

(71) Demandeur: **STMicroelectronics (ALPS) SAS**
**38000 Grenoble (FR)**

(72) Inventeur: **MICHAL, Vratislav**
**38120 FONTANIL-CORNILLON (FR)**

(74) Mandataire: **Casalonga**
**Casalonga & Partners**
**Bayerstraße 71/73**
**80335 München (DE)**

(54) **CIRCUIT INTEGRE DE DETECTION DE SEUIL DE TEMPERATURE ET PROCEDE CORRESPONDANT**

(57) Circuit intégré comprenant un circuit générateur de tension indépendante de la température (BG) configuré pour générer une tension constante avec la température (VBG) par somme d'une tension proportionnelle à la température absolue (VPTAT) et d'une tension complémentaire à la température absolue (VCTAT), et un circuit de détection de seuil de température (DET) comportant un pont résistif diviseur de tension (RS1, RS2) configuré pour générer une tension de référence (VREF) égale à une fraction de la tension constante avec la température (VBG) et un circuit comparateur (COMP) configuré pour comparer la tension proportionnelle à la température absolue (VPTAT) avec la tension de référence (VREF).

[Fig 1]

**(Cont. page suivante)**

[Fig 2]

**Description**

Des modes de réalisation et de mise en oeuvre concernent les circuits intégrés, notamment les circuits de détection de seuil de température.

Le comportement d'un dispositif électronique est généralement influencé par la température. Il est reconnu par exemple qu'un laser fonctionnant à basse température est capable d'émettre un faisceau plus puissant. Cependant, lorsque la température est trop basse, ce faisceau peut présenter un risque pour une personne exposée à celui-ci. Il est donc important de se prémunir de ce risque, notamment pour respecter de contraintes normalisées, et abaisser la puissance d'émission peut être désavantageux à des températures plus chaudes. Les techniques classiques de détection d'un seuil de température à partir duquel un dysfonctionnement d'un dispositif tel que le laser peut survenir présentent des difficultés soit en matière de manque de précision de la détection, soit en matière de complexité et de coût du produit.

En effet, des circuits connus permettant de détecter ce seuil de température ne sont pas toujours fiables et ne garantissent pas une détection précise du seuil de température. C'est notamment le cas lorsque ces circuits génèrent un signal représentatif de la température pouvant présenter des imperfections.

En effet, un signal représentatif de la température issu de tels circuits peut subir des variations indésirables. Ces variations peuvent avoir différentes origines, telles que des variations liées à l'alimentation de ces circuits. A une température donnée, une variation du signal représentatif de la température peut se traduire par exemple par un décalage ou une dérive du signal généré pour être représentatif de la température, par rapport à la température réelle.

Par conséquent, un décalage se produisant au seuil de détection peut entraîner une perte de précision significative sur la mesure de la température et une absence de détection ou bien une détection incorrecte du seuil de température. Bien qu'il existe des moyens permettant de réduire la dérive du signal généré, ceux-ci nécessitent typiquement l'ajout de circuits complexes et à coût élevé.

Il existe ainsi un besoin de proposer une solution simple permettant d'améliorer la fiabilité des détections de seuil de température, à faible complexité et à faible coût.

Selon un aspect, il est proposé un circuit intégré comprenant un circuit générateur de tension indépendante de la température configuré pour générer une tension constante avec la température par somme d'une tension proportionnelle à la température absolue et d'une tension complémentaire à la température absolue.

Le circuit intégré comprend également un circuit de détection de seuil de température comportant un pont résistif diviseur de tension configuré pour générer une tension de référence égale à une fraction de la tension constante avec la température et un circuit comparateur configuré pour comparer la tension proportionnelle à la température absolue avec la tension de référence.

D'une part, étant donné que la tension de référence est obtenue à partir de la tension constante avec la température, la tension de référence supporte, au moins en partie, les éventuelles variations indésirables de la tension constante avec la température. D'autre part, la tension proportionnelle à la température absolue supporte elle aussi, au moins en partie, les éventuelles variations indésirables de la tension constante avec la température. En conséquence, les éventuelles variations indésirables contenues dans la tension de référence et dans la tension proportionnelle à la température absolue se compensent « intrinsèquement », par construction, lors de la comparaison. Ainsi, on obtient une détection précise et fiable avec un circuit générateur de tension indépendante de la température pouvant être de conception classique, simple et économique.

Selon un mode de réalisation, le circuit générateur de tension indépendante de la température est configuré pour générer une tension constante avec la température sur un noeud de base et dans lequel le pont résistif diviseur de tension comporte un premier élément résistif couplé entre le noeud de base et un noeud de référence et un deuxième élément résistif couplé entre le noeud de référence et une borne de masse.

Selon un mode de réalisation, le pont résistif diviseur de tension est apte à modifier le rapport des valeurs résistives des éléments résistifs en conservant une valeur résistive totale des éléments résistifs en série, de façon commandée par un signal de contrôle.

Le rapport des valeurs résistives des éléments résistifs permet d'obtenir la tension de référence voulue, c'est-à-dire la tension correspondant à un seuil de température adapté à une application donnée du circuit intégré.

Selon un mode de réalisation, le circuit générateur de tension indépendante de la température comprend un premier transistor bipolaire ayant une base couplée sur le noeud de base, un émetteur couplé à un noeud intermédiaire d'un circuit résistif d'ajustement de la tension constante, et un collecteur couplé à une première branche.

Le circuit générateur de tension indépendante de la température comprend, en outre, un deuxième transistor bipolaire ayant une base couplée sur le noeud de base, un émetteur couplé au noeud intermédiaire du circuit résistif d'ajustement de la tension constante, et un collecteur couplé à une deuxième branche.

Le circuit générateur de tension indépendante de la température comprend également un circuit générateur de courant configuré pour générer un premier courant dans la première branche et un deuxième courant dans la deuxième branche, le premier transistor bipolaire, le deuxième transistor bipolaire, et le circuit résistif d'ajustement de la tension constante étant configurés conjointement pour générer la tension proportionnelle à la température absolue entre le noeud intermédiaire et la borne de masse, et pour générer la tension complémentaire à la température absolue entre le noeud de base et le noeud intermédiaire.

Un tel circuit générateur de tension indépendante de la température, usuellement désigné par les termes anglais « band-gap structure », permet de produire toutes les tensions utiles pour réaliser une détection du seuil de température, notamment la tension proportionnelle à la température absolue et la tension constante avec la température à partir de laquelle est obtenue la tension de référence.

Selon un mode de réalisation, le circuit générateur de courant comprend un amplificateur ayant une première entrée couplée sur la première branche et une deuxième entrée couplée sur la deuxième branche, l'amplificateur étant configuré pour générer un signal de commande sur le noeud de base adapté pour commander un asservissement de l'intensité des courants s'écoulant dans la première branche et dans la deuxième branche, par le premier transistor bipolaire et le deuxième transistor bipolaire.

Par « asservissement de l'intensité des courants », on entend qu'à partir du signal de commande généré sur les bases de deux transistors bipolaires possédant des superficies différentes, on ajuste simultanément la conductivité dans les deux branches respectives en fonction de la différence d'intensité des courants dans ces branches. En effet, par exemple, pour une même tension base-émetteur des transistors bipolaires, le transistor bipolaire ayant la plus grande superficie est capable d'augmenter l'intensité du courant circulant dans sa branche plus amplement que l'autre transistor bipolaire, jusqu'à l'obtention d'un courant identique dans les deux branches.

Selon un mode de réalisation, le circuit générateur courant comprend un montage miroir de courant configuré pour générer ledit premier courant dans la première branche et ledit deuxième courant dans la deuxième branche.

Un montage miroir de courant, classique et connu en soi, permet de dupliquer le courant s'écoulant dans la première branche pour générer un courant de même intensité dans la deuxième branche.

Selon un mode de réalisation, le circuit de génération de courant comprend un premier transistor MOS ayant des bornes de conduction couplées sur la première branche entre le miroir de courant et le collecteur du premier transistor bipolaire et une borne de commande couplée à un noeud de la deuxième branche, et un deuxième transistor MOS ayant des bornes de conduction couplées sur la deuxième branche entre le noeud de la deuxième branche et le collecteur du deuxième transistor bipolaire et une borne de commande couplée au noeud de la deuxième branche.

Le circuit de génération de courant comprend également un troisième transistor MOS ayant des bornes de conduction respectivement couplées à une borne de tension d'alimentation et au noeud de base et une borne de commande couplée au noeud de la deuxième branche.

D'une part, le premier transistor MOS permet de réduire l'influence des variations de la tension d'alimentation sur la tension constante avec la température, et donc sur la tension de référence.

D'autre part, le deuxième transistor MOS permet de réduire l'influence de l'effet d'Early lié au fonctionnement des transistors bipolaires sur le courant de la deuxième branche. Le courant de la deuxième branche devient donc indépendant de la tension collecteur-émetteur du deuxième transistor bipolaire. De même, cela permet aussi que le courant dupliqué dans la première branche devienne indépendant de la tension collecteur-émetteur du premier transistor bipolaire.

Enfin, le troisième transistor MOS permet de fournir suffisamment de courant sur le noeud de base pour alimenter le pont résistif diviseur de tension. En outre, le troisième transistor MOS permet de produire un asservissement du courant dans les branches par commande sur les bases des transistors bipolaires, de manière comparable au signal de commande défini précédemment.

Selon un autre aspect, il est prévu un système comprenant le circuit intégré tel que défini précédemment, dans lequel le circuit comparateur est configuré pour générer un signal de détection lorsque la tension proportionnelle à la température absolue est inférieure à la tension de référence, ou lorsque la tension proportionnelle à la température absolue est supérieure à la tension de référence et un circuit de contrôle connecté au circuit de détection de seuil de température et à un élément ayant des caractéristiques variant en température, le circuit de contrôle étant configuré pour désactiver l'élément lorsque le signal de détection est généré.

Il existe des systèmes intégrant des éléments pouvant avoir des caractéristiques variant avec la température et pouvant représenter un risque lorsque ceux-ci sont exposés à des températures trop hautes ou trop basses. Ainsi, en utilisant un circuit de détection de seuil de température tel que défini ci-avant au sein de ces systèmes, on peut désactiver de façon autonome et automatiquement ces dispositifs afin de protéger efficacement l'utilisateur contre ces risques.

Selon un autre aspect, il est proposé un procédé de détection d'un seuil de température à partir d'une tension constante avec la température générée par somme d'une tension proportionnelle à la température absolue et d'une tension complémentaire à la température absolue, comprenant une génération d'une tension de référence égale à une fraction de la tension constante avec la température, et une comparaison de la tension proportionnelle à la température absolue avec la tension de référence.

Selon un mode de mise en oeuvre, la génération de la tension constante avec la température est faite sur un noeud de base et dans lequel la génération de la tension de référence égale à une fraction de la tension constante avec la température est faite avec un pont résistif diviseur de tension comportant un premier élément résistif couplé entre le noeud de base et un noeud de référence et un deuxième élément résistif couplé entre le noeud de référence et une borne de masse.

Selon un mode de mise en oeuvre, le procédé comprend une modification par le pont diviseur de tension du rapport des valeurs résistives des éléments résistifs en conservant une valeur résistive totale des éléments résistifs en série, commandée par un signal de contrôle.

Selon un mode de mise en oeuvre, la génération de la tension constante avec la température comprend une génération d'un premier courant dans une première branche couplée au collecteur d'un premier transistor bipolaire, et d'un deuxième courant dans une deuxième branche couplée au collecteur d'un deuxième transistor bipolaire, et une génération de la tension proportionnelle à la température absolue aux bornes d'un premier élément résistif couplée entre un émetteur du premier transistor bipolaire une borne de masse.

La génération de la tension constante avec la température comprend également une génération de la tension complémentaire à la température absolue entre une base du deuxième transistor bipolaire et un noeud intermédiaire couplé à l'émetteur du deuxième transistor bipolaire par l'intermédiaire d'un deuxième élément résistif.

Selon un mode de mise en oeuvre, la génération dudit premier courant dans la première branche et dudit deuxième courant dans la deuxième branche comprend une commande du premier transistor bipolaire et du deuxième transistor bipolaire, de façon à réduire la différence d'intensité entre les courants s'écoulant respectivement dans la première branche et dans la deuxième branche, en fonction de la différence entre l'intensité du premier courant circulant dans la première branche et de l'intensité du deuxième courant circulant dans la deuxième branche.

Selon un mode de mise en oeuvre, la génération dudit premier courant dans la première branche et dudit deuxième courant dans la deuxième branche est faite par un montage miroir de courant.

Selon un autre aspect, il est prévu un procédé comprenant le procédé de détection d'un seuil de température tel que défini précédemment, comprenant une génération d'un signal de détection par le circuit comparateur lorsque la tension proportionnelle à la température absolue est inférieure à la tension de référence, ou lorsque la tension proportionnelle à la température absolue est supérieure à la tension de référence, et une désactivation d'un élément ayant des caractéristiques variant en température par un circuit de contrôle connecté au circuit de détection de seuil lorsque le signal de détection est généré.

D'autres avantages et caractéristiques de l'invention apparaîtront à l'examen de la description détaillée de mode de réalisation et de mise en oeuvre, nullement limitatifs, et des dessins annexés sur lesquels :

[Fig 1] ;
[Fig 2] ;

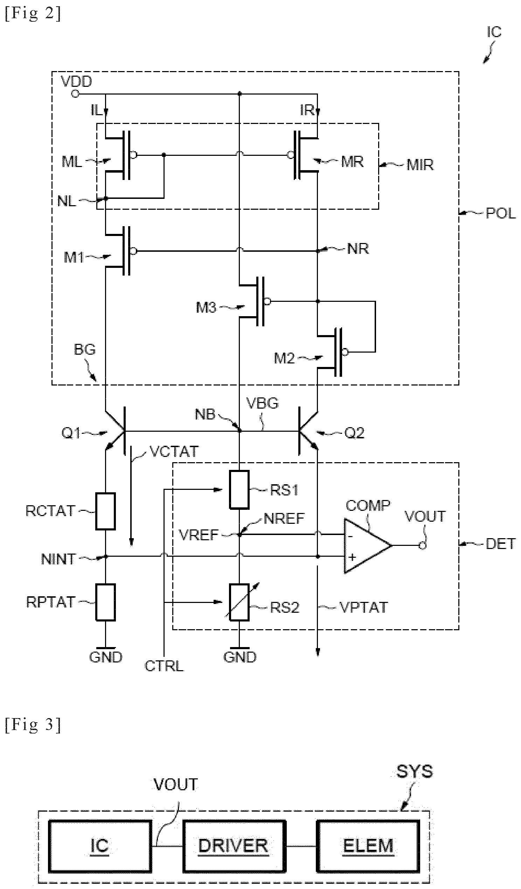

[Fig 3] illustrent schématiquement des modes de mise en oeuvre et de réalisation de l'invention.

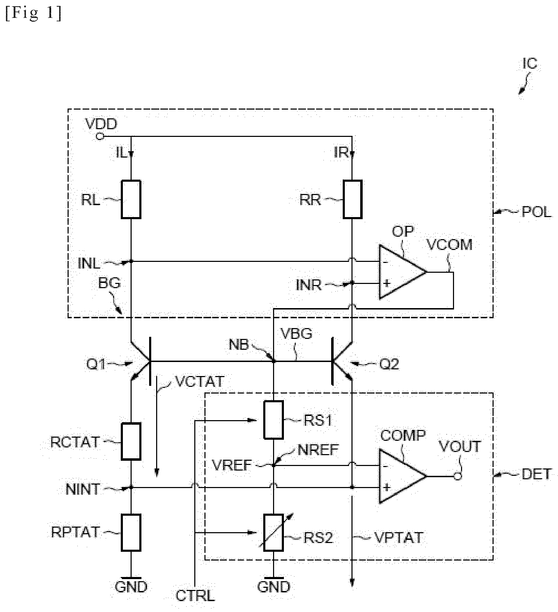

La figure 1 illustre schématiquement un circuit intégré IC, comportant un générateur de tension indépendante de la température BG selon un mode de réalisation.

Le circuit générateur de tension indépendante de la température BG comporte un premier transistor bipolaire Q1 et un deuxième transistor bipolaire Q2. De tels transistors bipolaires utilisés dans un circuit générateur de tension indépendante de la température BG sont connus en soi et possèdent des zones d'émetteur et des densités de courant de jonction base-émetteur différentes. A titre d'exemple, la superficie du premier transistor bipolaire Q1, correspondant à la taille du premier transistor bipolaire Q1, peut être huit fois supérieure à la superficie du deuxième transistor bipolaire Q2. Pour obtenir un tel rapport de tailles, le premier transistor bipolaire Q1 peut comprendre un montage en parallèle de N transistors bipolaires, par exemple N=8, dans lequel chacun des transistors bipolaires présente une superficie identique à celle du deuxième transistor bipolaire Q2. Un tel montage en parallèle peut être réalisé en couplant respectivement les collecteurs, les émetteurs ainsi que les bases de chaque transistor ensemble. Une superficie N fois plus grande permet au transistor bipolaire d'amplifier d'un facteur N l'intensité du courant sur son collecteur pour une même tension appliquée entre sa base et son émetteur.

La base du premier transistor bipolaire Q1 et la base du deuxième transistor bipolaire Q2 sont reliées ensemble sur un noeud de base NB commun. En particulier, le premier transistor bipolaire Q1 a un collecteur relié à une première branche. Le deuxième transistor bipolaire Q2 a un collecteur relié à une deuxième branche.

Le premier transistor bipolaire Q1 comporte un émetteur couplé à un noeud intermédiaire NINT d'un circuit résistif d'ajustement de la tension constante, par l'intermédiaire d'une première résistance RCTAT. Le deuxième transistor bipolaire Q2 comporte un émetteur couplé au noeud intermédiaire NINT du circuit résistif d'ajustement de la tension constante. Le circuit résistif d'ajustement de la tension constante comporte la première résistance RCTAT reliée entre l'émetteur du premier transistor bipolaire Q1 et le noeud intermédiaire NINT et une deuxième résistance RPTAT reliée entre le noeud intermédiaire NINT et une borne de masse GND.

Le premier transistor bipolaire Q1, le deuxième transistor bipolaire Q2 et le circuit résistif d'ajustement de la tension constante sont configurés conjointement pour générer une tension proportionnelle à la température absolue VPTAT entre le noeud intermédiaire NINT

et la borne de masse GND, et pour générer une tension complémentaire à la température absolue VCTAT entre le noeud de base NB et le noeud intermédiaire NINT. En particulier, la tension complémentaire à la température absolue VCTAT possède un coefficient inversement proportionnel à la température, et la tension proportionnelle à la température absolue VPTAT possède un coefficient proportionnel à la température, qui sont issus de la différence de densité de courant de la jonction base-émetteur entre le premier transistor bipolaire Q1 et le deuxième transistor bipolaire Q2 lorsque les transistors Q1 et Q2 sont traversés par un courant de même intensité.

Ainsi, on retrouve sur le noeud de base NB une tension constante avec la température VBG égale à la somme de la tension proportionnelle à la température absolue VPTAT et de la tension complémentaire à la température absolue VCTAT.

Avantageusement, les valeurs des résistances RCTAT et RPTAT sont ajustées afin d'ajuster les tensions VPTAT et VCTAT pour obtenir la tension constante avec la température VBG.

Le circuit générateur de tension indépendante de la température BG comprend en outre un circuit générateur de courant POL. Le circuit générateur de courant POL comprend une borne de tension d'alimentation VDD et un amplificateur opérationnel OP.

L'amplificateur OP possède une première entrée INL connectée à la première branche, une deuxième entrée INR connectée à la deuxième branche et une sortie reliée au noeud de base NB. La première entrée INL et la deuxième entrée INR correspondent respectivement à l'entrée inverseuse et à l'entrée non-inverseuse de l'amplificateur OP.

Par ailleurs, le circuit générateur de courant POL comporte une résistance RL sur la première branche et une résistance RR sur la deuxième branche.

La résistance RL est connectée entre la borne de tension d'alimentation VDD et la première entrée INL de l'amplificateur OP sur la première branche. La résistance RR est connectée entre la borne de tension d'alimentation VDD et la deuxième entrée INR de l'amplificateur OP sur la deuxième branche.

Les résistances RL et RR ont des valeurs résistives égales et permettent de générer, sur les entrées de l'amplificateur opérationnel OP, des signaux en tension directement proportionnels aux courants s'écoulant respectivement dans la première branche IL et dans la deuxième branche IR.

L'amplificateur OP est configuré pour générer un signal de commande VCOM sur le noeud de base NB, par exemple une tension de commande, en fonction de l'écart de potentiel entre la première entrée INL et la deuxième entrée INR. Cet écart de potentiel est positif lorsque le potentiel de la première entrée INL est supérieur au potentiel de la deuxième entrée INR, et négatif dans le cas contraire.

En particulier, le signal de commande VCOM permet de commander le courant de base du premier transistor bipolaire Q1 et du deuxième transistor bipolaire Q2 jusqu'à ce que le premier courant IL et le deuxième courant IR soient identiques.

D'une part, le signal de commande VCOM permet de commander une augmentation du courant de base du premier transistor bipolaire Q1 et du deuxième transistor bipolaire Q2 lorsque l'écart de potentiel entre les entrées de l'amplificateur OP est négatif.

D'autre part, le signal de commande VCOM permet de commander une diminution du courant de base lorsque l'écart de potentiel entre les entrées de l'amplificateur OP est positif.

Par conséquent, le signal de commande VCOM est donc adapté pour commander un asservissement de l'intensité du premier courant IL s'écoulant dans la première branche et du deuxième courant IR s'écoulant dans la deuxième branche. Les intensités des courants IL et IR peuvent ainsi être régulées durant toute la période de fonctionnement du circuit générateur de tension indépendante de la température BG.

En alternative, le circuit générateur de courant POL peut être réalisé avec un montage de transistors de type MOS (acronyme des termes classiques et connus en soi « Métal Oxyde Semiconductor ») tel que décrit ci-après en relation avec la figure 2.

Le circuit intégré IC comprend également un circuit de détection de seuil de température DET. Le circuit de détection de seuil DET comporte un pont résistif diviseur de tension. Le pont résistif diviseur de tension comporte une première résistance RS1 et une deuxième résistance RS2. La première résistance RS1 est reliée entre le noeud de base NB et un noeud de référence NREF et la deuxième résistance RS2 est reliée entre le noeud de référence NREF et la borne de masse GND.

Ainsi, le pont résistif diviseur de tension génère une tension de référence VREF entre le noeud de référence NREF et la borne de masse GND. La tension de référence VREF est égale à une fraction de la tension constante avec la température VBG et vaut en particulier :

$$VREF = \frac{RS2}{RS1+RS2} \times VBG = k \times VBG.$$

Par ailleurs, le pont résistif diviseur de tension peut recevoir un signal de contrôle CTRL provenant d'un circuit de commande externe par exemple. Selon le signal de contrôle CTRL reçu, le pont résistif diviseur de tension peut augmenter ou diminuer le rapport « k » des valeurs résistives de la première résistance RS1 et de la deuxième résistance RS2 en conservant une valeur résistive totale des résistances RS1 et RS2 en série.

Un utilisateur peut alors définir le rapport résistif du pont résistif diviseur de tension en utilisant le signal de contrôle CTRL et modifier par conséquence la valeur de la tension de référence VREF. La tension de référence VREF peut être modifiée pour qu'elle puisse correspondre à un seuil de température voulu pour une application donnée, par exemple à une température de -15°C.

Le circuit de détection de seuil de température DET comporte, en outre, un circuit comparateur COMP qui peut être un amplificateur opérationnel monté en comparateur par exemple.

Le circuit comparateur COMP comprend une entrée inverseuse connectée au noeud de référence NREF et une entrée non-inverseuse connectée au noeud intermédiaire NINT. Cela permet de détecter une baisse de la température au-dessous du seuil de température déterminée par la tension de référence VREF.

En intervertissant les connexions des entrées du circuit comparateur COMP, c'est-à-dire en connectant l'entrée inverseuse au noeud intermédiaire NINT et l'entrée non-inverseuse au noeud de référence NREF, le circuit comparateur COMP est configuré pour détecter une hausse de la température au-dessus du seuil de température déterminée par la tension de référence VREF.

A l'issu de la comparaison, le circuit comparateur COMP génère en sortie un signal de détection VOUT lorsque la tension proportionnelle à la température absolue VPTAT est supérieure à la tension de référence VREF ou lorsque la tension proportionnelle à la température absolue VPTAT est inférieure à la tension de référence VREF.

Ainsi, le circuit comparateur COMP permet de détecter lorsque la température mesurée atteint un seuil de température haute ou un seuil de température basse.

D'une part, si une variation parasite de la tension constante avec la température VBG se manifeste alors une variation parasite se retrouve également dans la tension complémentaire à la température absolue VPTAT et dans la tension proportionnelle à la température absolue VPTAT qui définissent la tension constante avec la température VBG. Autrement dit, la tension proportionnelle à la température absolue VPTAT subit des variations similaires à celles de la tension constante avec la température VBG.

D'autre part, la tension de référence VREF présente une variation parasite correspondant à la variation de la tension VBG proportionnellement au rapport résistif « k » du pont résistif diviseur de tension.

En faisant la comparaison de la tension proportionnelle à la température absolue VPTAT avec la tension de référence VREF, les variations parasites dans chacune de ces tensions se compensent mutuellement au premier ordre.

La compensation des variations parasites permet de réduire sensiblement la disparité entre le signal proportionnel à la température VPTAT et la tension de référence VREF afin de garantir une détection fiable du seuil de température.

Par exemple, des mesures expérimentales réalisées pour une détection d'un seuil de température de -15°C ont été obtenues avec une imprécision de seulement 2,7°C pour un écart maximal à la moyenne correspondant à trois écart-types.

La figure 2 illustre une variante du circuit générateur de courant POL comprenant, dans cette variante un montage miroir de courant actif MIR.

Le montage miroir de courant MIR comprend un transistor MOS ML sur la première branche et un transistor MOS MR sur la deuxième branche. Le transistor MOS ML de la première branche a une source reliée à la borne de tension d'alimentation VDD, une grille et un drain reliés à un noeud NL de la première branche. Le transistor MOS MR de la deuxième branche a une source reliée à la borne de tension d'alimentation VDD, une grille couplée à la grille du transistor MOS ML de la première branche et un drain relié à un noeud NR de la deuxième branche.

Un tel montage miroir de courant MIR permet classiquement de générer le premier courant IL sur la première branche et le deuxième courant IR de même intensité que le premier courant IL sur la deuxième branche.

Le circuit générateur de courant POL comprend, en outre, un premier transistor MOS M1, un deuxième transistor MOS M2 ainsi qu'un troisième transistor MOS M3.

Le premier transistor MOS M1 a une source reliée au drain du transistor MOS ML de la première branche, une grille reliée au noeud NR de la deuxième branche et un drain relié au collecteur du premier transistor bipolaire Q1.

Le premier transistor MOS M1 permet de réduire l'influence des variations de la tension d'alimentation VDD sur la tension constante avec la température VBG, et donc sur la tension de référence VREF.

Le deuxième transistor MOS M2 a une source et une grille reliées au noeud NR de la deuxième branche et un drain relié au collecteur du deuxième transistor bipolaire Q2.

Le deuxième transistor MOS M2 permet de réduire l'influence de l'effet d'Early lié au fonctionnement des transistors bipolaires Q1 et Q2 sur le deuxième courant IR de la deuxième branche. Le courant IR de la deuxième branche devient donc indépendant de la tension collecteur-émetteur du deuxième transistor bipolaire Q2. De même, cela permet aussi que le premier courant IL dupliqué dans la première branche devienne indépendant de la tension collecteur-émetteur du premier transistor bipolaire Q1.

Le troisième transistor MOS M3 a une source reliée à la borne de tension d'alimentation VDD, une grille reliée au noeud NR de la deuxième branche et un drain relié au noeud de base NB.

Enfin, le troisième transistor MOS M3 permet de fournir suffisamment de courant sur le noeud de base NB pour alimenter le pont résistif diviseur de tension. En outre, le troisième transistor MOS M3 permet de produire un asservissement du courant dans les branches par commande sur les bases des transistors bipolaires Q1 et Q2, de manière comparable au signal de commande VCOM défini précédemment.

La figure 3 illustre un système SYS comprenant le circuit intégré IC tel que décrit précédemment en relation avec la figure 1 ou en relation avec la figure 2.

Le système SYS comprend un circuit de contrôle DRIVER et un élément ELEM ayant des caractéristiques variant avec la température. Le circuit de contrôle DRIVER est connecté au circuit de détection du seuil de température DET et à l'élément ELEM. L'élément ELEM peut être un dispositif électronique tel qu'une diode laser à cavité verticale pouvant émettre un rayonnement relativement puissant lorsque la température est inférieure à un seuil, par exemple lorsque la température est inférieure à -15°C. Le circuit de contrôle DRIVER peut-être typiquement un circuit de commande de la diode laser.

Le circuit de contrôle DRIVER est configuré pour désactiver l'élément ELEM lorsque le signal de détection VOUT est généré. La désactivation de l'élément ELEM, tel que la diode laser, au seuil de température peut par exemple permettre d'éviter que la diode émette un rayonnement pouvant présenter un danger pour un utilisateur, et/ou satisfaire à une norme.

**Revendications**

1. Circuit intégré comprenant un circuit générateur de tension indépendante de la température (BG) configuré pour générer une tension constante avec la température (VBG) par somme d'une tension proportionnelle à la température absolue (VPTAT) et d'une tension complémentaire à la température absolue (VCTAT),**caractérisé en ce que** le circuit intégré comprend en outre un circuit de détection de seuil de température (DET) configuré pour générer une tension de référence (VREF) égale à une fraction de la tension constante avec la température (VBG) et un circuit comparateur (COMP) configuré pour comparer la tension proportionnelle à la température absolue (VPTAT) avec la tension de référence (VREF).

2. Circuit intégré selon la revendication 1, dans lequel le circuit générateur de tension indépendante de la température (BG) est configuré pour générer une tension constante avec la température (VBG) sur un noeud de base (NB) et dans lequel le pont résistif diviseur de tension comporte un premier élément résistif (RS1) couplé entre le noeud de base (NB) et un noeud de référence (NREF) et un deuxième élément résistif (RS2) couplé entre le noeud de référence (NREF) et une borne de masse (GND).

3. Circuit intégré selon la revendication 2, dans lequel le pont résistif diviseur de tension (RS1, RS2) est apte à modifier le rapport des valeurs résistives des éléments résistifs (RS1, RS2) en conservant une valeur résistive totale des éléments résistifs en série, de façon commandée par un signal de contrôle (CTRL).

4. Circuit intégré selon l'une des revendications 2 ou 3, dans lequel le circuit générateur de tension indépendante de la température (BG) comprend :

- un premier transistor bipolaire (Q1) ayant une base couplée sur le noeud de base (NB), un émetteur couplé à un noeud intermédiaire (NINT) d'un circuit résistif d'ajustement de la tension constante (RCTAT, RPTAT), et un collecteur couplé à une première branche,
- un deuxième transistor bipolaire (Q2) ayant une base couplée sur le noeud de base (NB), un émetteur couplé au noeud intermédiaire (NINT) du circuit résistif d'ajustement de la tension constante (RCTAT, RPTAT), et un collecteur couplé à une deuxième branche,
- un circuit générateur de courant (POL) configuré pour générer un premier courant (IL) dans la première branche et un deuxième courant (IR) dans la deuxième branche,
- le premier transistor bipolaire (Q1), le deuxième transistor bipolaire (Q2), et le circuit résistif d'ajustement de la tension constante (RCTAT, RPTAT) étant configurés conjointement pour générer la tension proportionnelle à la température absolue (VPTAT) entre le noeud intermédiaire (NINT) et la borne de tension de masse (GND), et pour générer la tension complémentaire à la température absolue (VCTAT) entre le noeud de base (NB) et le noeud intermédiaire (NINT).

5. Circuit intégré selon la revendication 4, dans lequel le circuit générateur de courant (POL) comprend un amplificateur (OP) ayant une première entrée (INR) couplée sur la première branche et une deuxième entrée (INL) couplée sur la deuxième branche, l'amplificateur (OP) étant configuré pour générer un signal de commande (VCOM) sur le noeud de base (NB) adapté pour commander un asservissement de l'intensité des courants (IR, IL) s'écoulant dans la première branche et dans la deuxième branche, par le premier transistor bipolaire (Q1) et le deuxième transistor bipolaire (Q2).

6. Circuit selon la revendication 4, dans lequel le circuit générateur courant (POL) comprend un montage miroir de courant (MIR) configuré pour générer ledit premier courant (IL) dans la première branche et ledit deuxième courant (IR) dans la deuxième branche.

7. Circuit intégré selon la revendication 6, dans lequel le circuit de génération de courant (POL) comprend :

- un premier transistor MOS (M1) ayant des bornes de conduction couplées sur la première branche entre le miroir de courant (MIR) et le collecteur du premier transistor bipolaire (Q1) et une borne de commande couplée à un noeud (NR) de la deuxième branche, et

- un deuxième transistor MOS (M2) ayant des bornes de conduction couplées sur la deuxième branche entre le noeud (NR) de la deuxième branche et le collecteur du deuxième transistor bipolaire (Q2) et une borne de commande couplée au noeud (NR) de la deuxième branche,

- un troisième transistor MOS (M3) ayant des bornes de conduction respectivement couplées à une borne de tension d'alimentation (VDD) et au noeud de base (NB) et une borne de commande couplée au noeud (NR) de la deuxième branche.

8. Système de mesure de la température, comprenant :

- le circuit intégré selon l'une des revendications 1 à 7, dans lequel le circuit comparateur (COMP) est configuré pour générer un signal de détection (VOUT) lorsque la tension proportionnelle à la température absolue (VPTAT) est inférieure à la tension de référence (VREF), ou lorsque la tension proportionnelle à la température absolue (VPTAT) est supérieure à la tension de référence (VREF)

- un circuit de contrôle (DRIVER) connecté au circuit de détection de seuil de température (DET) et à un élément (ELEM) ayant des caractéristiques variant en température, le circuit de contrôle (DRIVER) étant configuré pour désactiver l'élément (ELEM) lorsque le signal de détection est généré.

9. Procédé de détection d'un seuil de température à partir d'une tension constante avec la température (VBG) générée par somme d'une tension proportionnelle à la température absolue (VPTAT) et d'une tension complémentaire à la température absolue (VCTAT), **caractérisé en ce que** le procédé comprend une génération d'une tension de référence (VREF) égale à une fraction de la tension constante avec la température (VBG), et une comparaison de la tension proportionnelle à la température absolue (VPTAT) avec la tension de référence (VREF).

10. Procédé selon la revendication 9, dans lequel la génération de la tension constante avec la température (VBG) est faite sur un noeud de base (NB) et dans lequel la génération de la tension de référence (VREF) égale à une fraction de la tension constante avec la température (VBG) est faite avec un pont résistif diviseur de tension comportant un premier élément résistif (RS1) couplé entre le noeud de base (NB) et un noeud de référence (NREF) et un deuxième élément résistif (RS2) couplé entre le noeud de référence (NREF) et une borne de masse (GND).

11. Procédé selon la revendication 10, comprenant une modification par le pont diviseur de tension (RS1, RS2) du rapport des valeurs résistives des éléments résistifs (RS1, RS2) en conservant une valeur résistive totale des éléments résistifs en série, commandée par un signal de contrôle (CTRL).

12. Procédé selon l'une des revendications 10 ou 11, dans lequel la génération de la tension constante avec la température (VBG) comprend :

- une génération d'un premier courant (IL) dans une première branche couplée au collecteur d'un premier transistor bipolaire (Q1), et d'un deuxième courant (IR) dans une deuxième branche couplée au collecteur d'un deuxième transistor bipolaire (Q2),

- une génération de la tension proportionnelle à la température absolue (VPTAT) aux bornes d'un premier élément résistif (RPTAT) couplée entre un émetteur du deuxième transistor bipolaire (Q2) une borne de masse (GND),

- une génération de la tension complémentaire à la température absolue (VCTAT) entre une base du premier transistor bipolaire (Q1) et un noeud intermédiaire (NINT) couplé à l'émetteur du premier transistor bipolaire (Q1) par l'intermédiaire d'un deuxième élément résistif (RCTAT).

13. Procédé selon la revendication 12, dans lequel la génération dudit premier courant (IL) dans la première branche et dudit deuxième courant (IR) dans la deuxième branche comprend une commande du premier transistor bipolaire (Q1) et du deuxième transistor bipolaire (Q2) , de façon à réduire la différence d'intensité entre les courants (IR, IL) s'écoulant respectivement dans la première branche et dans la deuxième branche, en fonction de la différence entre l'intensité du premier courant (IL) circulant dans la première branche et de l'intensité du deuxième courant (IR) circulant dans la deuxième branche.

14. Procédé selon la revendication 12, dans lequel la génération dudit premier courant (IL) dans la première branche et dudit deuxième courant (IR) dans la deuxième branche est faite par un montage miroir de courant (MIR).

15. Procédé de mesure de la température comprenant :

- le procédé de détection d'un seuil de température selon la revendication 9 à 14 comprenant en outre une génération d'un signal de détection

(VOUT) lorsque la tension proportionnelle à la température absolue (VPTAT) est inférieure à la tension de référence (VREF), ou lorsque la tension proportionnelle à la température absolue (VPTAT) est supérieure à la tension de référence (VREF),
- une désactivation d'un élément (ELEM) ayant des caractéristiques variant en température par un circuit de contrôle (DRIVER) lorsque le signal de détection est généré.

[Fig 1]

[Fig 2]

[Fig 3]

Europäisches
Patentamt

European
Patent Office

Office européen
des brevets

# RAPPORT DE RECHERCHE EUROPEENNE

Numéro de la demande

**EP 23 16 5796**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 842 317 A1 (ATMEL NANTES SA [FR]) 16 janvier 2004 (2004-01-16) * page 11, ligne 1 – page 17, ligne 33; figures 1-2 * * page 20, ligne 29 – page 23, ligne 29; revendications 14-15; figure 5 * ----- | 1-15 | INV. G01K3/00 G01K7/01 G05F3/30 |
| | | | DOMAINES TECHNIQUES RECHERCHES (IPC) |
| | | | G01K G05F |

Le présent rapport a été établi pour toutes les revendications

| Lieu de la recherche | Date d'achèvement de la recherche | Examinateur |
|---|---|---|
| La Haye | 4 avril 2023 | Rosello Garcia, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 .......................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 16 5796

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-04-2023

| Document brevet cité<br>au rapport de recherche | Date de<br>publication | Membre(s) de la<br>famille de brevet(s) | Date de<br>publication |
|---|---|---|---|
| FR 2842317 A1 | 16-01-2004 | DE 03364013 T1 | 15-07-2004 |
| | | EP 1380914 A1 | 14-01-2004 |
| | | FR 2842317 A1 | 16-01-2004 |
| | | US 2004036460 A1 | 26-02-2004 |

Pour tout renseignement concernant cette annexe : voir Journal Officiel de l'Office européen des brevets, No.12/82